Europäisches Patentamt

European Patent Office

Office européen des brevets

(19)

(11) EP 0 638 685 B1

(12) **EUROPÄISCHE PATENTSCHRIFT**

(45) Veröffentlichungstag und Bekanntmachung des Hinweises auf die Patenterteilung:
23.12.1998 Patentblatt 1998/52

(51) Int Cl.⁶: **D06M 11/40**, D06M 13/148, D06M 13/402, D06M 13/256

(21) Anmeldenummer: 94810451.8

(22) Anmeldetag: 02.08.1994

(54) **Mercerisiernetzmittel**

Welling agent for mercerising

Agent mouillant pour le mercerisage

(84) Benannte Vertragsstaaten:
**BE CH DE ES FR GB IT LI**

(30) Priorität: **10.08.1993 CH 2376/93**

(43) Veröffentlichungstag der Anmeldung:
**15.02.1995 Patentblatt 1995/07**

(73) Patentinhaber: **Ciba Specialty Chemicals Holding Inc.**
**4057 Basel (CH)**

(72) Erfinder:
• **Stehlin, Albert**
 **F-68300 Rosenau (FR)**
• **Maier, Thomas, Dr.**
 **D-79418 Schliengen (DE)**

(56) Entgegenhaltungen:
EP-A- 0 102 930       EP-A- 0 394 848
CH-A- 325 575          DE-B- 1 042 525
DE-C- 587 583          DE-C- 734 509
FR-A- 1 361 371        GB-A- 813 516

**Beschreibung**

Die vorliegende Erfindung betrifft Mercerisiernetzmittel auf Kohlenhydratbasis für cellulosehaltige Fasermaterialien.

Die Mercerisierung ist ein üblicher Schritt bei der Verarbeitung von cellulosehaltigen Fasermaterialien und betrifft die Behandlung dieser Materialien mit wässrigem Alkalihydroxid.

Mercerisiernetzmittel müssen verschiedene applikatorische Anforderungen erfüllen. Zum einen sollen sie in den stark alkalischen Mercerisierflotten ein ausreichendes Netzvermögen aufweisen. Da die zu mercerisierende Ware in schnell arbeitenden Mercerisiermaschinen mit hoher Geschwindigkeit durch die Flotte bewegt wird, muß sie innerhalb einer kürzeren Zeit benetzt werden als dies bei langsamer arbeitenden Maschinen der Fall ist. Durch die höhere Durchlaufgeschwindigkeit des zu mercerisierenden Materials wird auf der Flotte vermehrt Schaum gebildet, wodurch z.B. bei der Garnmercerisierung nicht nur eine schnelle, sondern auch eine gleichmäßige Benetzung des Garns verhindert wird. Ein weiteres Kriterium für ein gutes Mercerisiernetzmittel ist daher die Unterdrückung der Schaumbildung in der Mercerisierflotte. Weiterhin stört die Bildung von voluminösen Schaumschichten auch die Aufkonzentrierung und Rückgewinnung des Alkalihydroxids in den auf das Mercerisierbad folgenden Waschbädern.

Aus der EP-A-0,102,930 sind Mercerisiernetzmittel auf Basis von Schwefelsäureestern von Fettalkoholen bekannt, die sowohl ein gutes Netzvermögen aufweisen als auch schaumarm in der Anwendung sind. Leider sind diese Netzmittel aus ökologischer Sicht weniger vorteilhaft, da sie sich nur schwer biologisch abbauen lassen.

Es wurden nun Mercerisiernetzmittel auf Kohlenhydrat-Basis gefunden, die biologisch gut abbaubar sind und sich gleichzeitig durch eine gute Netzwirkung und geringe Schaumbildung auszeichnen.

Gegenstand der vorliegenden Erfindung sind daher Mercerisiebäder, enthaltend

(a) mindestens eine Verbindung der Formel

$$(2) \qquad R_1\text{-}CH_2(CHOH)_m CO\text{-}NH\text{-}R_3$$

oder mindestens eine Verbindung der Formel

$$(3) \qquad R_1\text{-}CH_2(CHOH)_m O\text{-}R_4,$$

worin

$R_1$ Hydroxy oder -$SO_3M$,
$R_3$ $C_4$-$C_{10}$-Alkyl,
$R_4$ $C_6$-$C_{10}$-Alkyl,
M Alkalimetall und
m 2 bis 6 bedeuten,

(b) eine Alkylimetallhydroxid-Lösung und
(c) Wasser ad 100 Gew.%,

wobei die Komponente (a) in einer Konzentration von 1 bis 20 g/l, und die Komponente (b) in einer Konzentration von 22 bis 28 Gew.% anwesend sind.

Gegenstand der vorliegenden Erfindung sind ferner ein Verfahren zur Mercerisierung von cellulosehaltigen Fasermaterialien sowie ein Verfahren zur Reduzierung der Schaumbildung bei der Rückgewinnung von Alkalihydroxid aus Mercerisierwaschbädern.

Bei den Verbindungen der Formeln (2) und (3) handelt es sich um Alkylglykoside (Alkyletherpolyole), bzw., um Alkylcarboxamidoglykoside (Alkylglyconamide).

Die erfindungsgemäss verwendeten Alkylglykoside bzw. Alkylcarboxamidoglykoside sind an sich bekannte Verbindungen, deren Herstellung in zahlreichen Druckschriften beschrieben ist So ist die Herstellung der Alkylglykoside z.B. in US-A-3,547,828; US-A-3,772,269; und US-A-3,839,318 und den europäischen Patentanmeldungen EP-A-0,301,298; EP-A-0,357,969; und EP-A-0,362,671 beschrieben. Dabei können die als Alkylglykoside bezeichneten Reaktionsprodukte aus Monosacchariden der Formel

$$(3a) \qquad R_1\text{-}CH_2(CHOH)_m OH$$

und Alkoholen der Formel

$$(3b) \qquad R_2\text{-OH}$$

worin

R$_1$ Hydroxy oder -SO$_3$M,
R$_2$ C$_{6\text{-}10}$ Alkyl und
m 2 bis 6 bedeuten,

entweder durch direkte Umsetzung mit einem Überschuss des Alkohols und in Anwesenheit einer Säure, wie z.B. Chlorwasserstoff als Katalysator oder durch Umacetalisierung unter Mitverwendung eines niederen Alkohols, der gleichzeitig als Lösungsmittel und Reaktionspartner wirkt, hergestellt werden. Bei den erfindungsgemäss verwendeten Alkylglykosiden handelt cs sich z.B. um Reaktionsprodukte aus den Monosacchariden Glucose, Fructose, Mannose, Galactose, Talose, Gulose, Allose, Altrose, Isose, Arabinose, Xylose, Lyxose und Ribose und den entsprechenden C$_6$-C$_{10}$-Alkoholen.

Als Alkohole kommen dabei zweckmässigerweise geradkettige Alkohole in Betracht, die entweder synthetisch hergestellt werden oder die als Fettalkohole bekanntermassen aus natürlichen Rohstoffen zugänglich sind. Alkohole natürlicher Herkunft sind z.B. Myristylalkohol, Cetylalkohol, Stearylalkohol oder Oleylalkohol. Bei den synthetischen Alkoholen handelt es sich in erster Linie um Alkohole, die sich von verzweigten Kohlenstoffen ableiten, wic z.B. Isobutylalkohol, sek.Butanol, tert.Butanol, Isoamylalkohol, 2-Ethylbutanol, 2-Methylpentanol, 5-Methylheptan-3-ol, 2-Ethylhexanol, 1,1,3,3-Tetramethylbutanol, Octan-2-ol, Isononylalkohol, Trimethylhexanol, Trimethylnonylalkohol. n-Decanol. Selbstverständlich kann es sich bei den Alkoholen auch um Mischungen handeln. Derartige Mischungen können sich insbesondere von den in der Fettchemie üblichen technischen Mischungen von geradkettigen C$_6$-C$_{10}$-Alkoholen ableiten.

Die erfindungsgemäss verwendeten Alkylglykoside können herstellungsbedingt geringe Mengen, vorzugsweise unter 2 Gew.-%, an nicht umgesetzten C$_4$-C$_{18}$-Alkoholen enthalten, was sich allerdings nicht nachteilig auf ihre Verwendung als Mercerisiernetzmittel auswirkt.

Erfindungsgemäss zu verwendende Alkylcarboxamidoglykoside der Formel (2) sind z.B. aus der FR-A-2,523,962 bekannt. Diese Verbindungen werden z.B. hergestellt durch Umsetzung einer Aldonsäure der Formel

$$(2a) \qquad R_1\text{-CH}_2(\text{CHOH})_m\text{COOH},$$

worin

R$_1$ Hydroxy oder -SO$_3$M und
m 2 bis 6 bedeuten,

und die gegebenenfalls in Form eines Lactons vorliegen kann, mit einem Amin der Formel

$$(2b) \qquad R_2\text{-NH}_2$$

worin
R$_2$ C$_4$-C$_{10}$ Alkyl bedeuten.

Die Carboxylgruppe der Aldonsäure kann dabei mit Hilfe eines Carbodiimids, wie z.B. Dicyclohexylcarbodiimid in einem organischen Lösungsmittel aktiviert werden. Gegebenenfalls kann Hydroxybenzotriazol als Katalysator mitverwendet werden. Die Aldonsäuren werden zur Herstellung der erfindungsgemäss zu verwendenden Glycoside (Glyconamide) in Form ihrer Alkalisalze, wie z.B. als Natrium- oder Kaliumsalze eingesetzt.

Die Herstellung der Aldonsäuren der Formel (2a) erfolgt in an sich bekannter Weise durch Oxidation, wie z.B. elektrochemischer Oxidation der entsprechenden Monosaccharide. Als Aldonsäuren der Formel (2a) kommen beispielsweise in Betracht: Gluconsäure, Mannonsäure, Galactonsäure, Lyxonsäure, Arabinonsäure, Xylonsäure, Ribonsäure, Glucoheptonsäure oder Glucooctonsäure. Als Amine für die Herstellung der Alkylamidoglykoside der allgemeinen Formel (2) kommen z.B. in Betracht: n-Octylamin, tert. Octylamin, Decylamin, Dodecylamin, Laurylamin. Tetradecylamin, oder Miristylamin, Hexadecylamin oder Palmitylamin, sowie Octadecylamin oder Stearylamin.

Alkalimetall bedeutet Lithium, Kalium oder vorzugsweise Natrium.

Ganz besonders bevorzugt sind Mercerisierbäder, die mindestens eine der Verbindungen der Formel (2) oder (3) enthalten, worin m 2 bis 4 bedeutet.

Die Verbindungen der Formeln (2) oder (3) werden sowohl als Einzelverbindungen als auch als Gemische eingesetzt. Als Gemische kommen vorzugsweise Verbindungen der Formeln und

$$(4) \qquad NaSO_3\text{-}CH_2(CHOH)_{\overline{m_2}}O\text{-}R_5$$

und

$$(5) \qquad OH\text{-}CH_2(CHOH)_{\overline{m_2}}O\text{-}R_6$$

in Betracht, worin

$R_5$    $C_6$-$C_{10}$-Alkyl
$R_6$    $C_6$-$C_8$ Alkyl und
$m_2$    unabhängig voneinander, 2 bis 4 bedeuten.

Als Verbindung der Formel (5) kommt insbesondere Butylglycosid in Frage.

Das Mischungsverhältnis der Verbindungen der Formel (4) mit Verbindungen der Formel (5) beträgt dabei 9:1 bis 5:5, vorzugsweise 8:2 bis 6:4.

Die erfindungsgemäss verwendeten Mercerisierbäder werden in Form einer wässrigen Lösung verwendet. Zu diesem Zweck werden 1-20, vorzugsweise 2,5 bis 10 g der wässrigen Lösung pro Liter Mercerisierflotte verwendet.

Cellulosefasern erhalten durch die Mercerisierung beispielsweise einen höheren Glanz. Gleichzeitig werden ihre Farbstoffaufnahmefähigkeit sowie die Reissfestigkeit verbessert. Diese Fasern werden dazu mit konzentrierten Alkalihydroxid-Lösungen (22 bis 28 %), wie z.B. wässrigen Lösungen von Lithium-, Natrium- oder Kaliumhydroxid oder Mischungen dieser Hydroxide behandelt. Dabei können die Fasern einer gleichzeitigen Streckung unterworfen werden, wodurch sich eine weiten Steigerung des Glanzeffektes erzielen lässt. Am häufigsten wird die sogenannte Kaltmercerisierung (im Gegensatz zur Heissmercerisierung, die bei einer Badtemperatur von 20-80°C durchgeführt wird) angewendet. Die Badtemperatur beträgt im Falle der Kaltmercerisierung etwa -20 bis +20°C. Besondere Effekte, wie z. B. Transparenteffekte können durch Verwendung von bis auf -20°C abgekühlten Bädern erhalten werden. Vorzugsweise beträgt die Temperatur jedoch 5 bis 20°C. Je nachdem, ob die Fasern in trockenem, vorgekochtem oder vorgenetztem Zustand mercerisiert werden, spricht man von der Trocken- oder Nassmercerisation. Besonders die Trockenmercerisierung macht verständlicherweise die Verwendung von sehr wirksamen Mercerisiernetzmitteln erforderlich.

Eine weitere, für die Mercerisierung positive Eigenschaft der erfindungsgemässen Mercerisierbäder ist ihre Fähigkeit, die in den Alkalihydroxid-Lösungen der Mercerisierflotten enthaltenen Eisenionen zu binden. Die erfindungsgemässen Mercerisierbäder zeichnen sich durch ein ausgezeichnetes Eisenbindevermögen aus, was den Vorteil hat, dass auf den zusätzlichen Einsatz von entsprechenden Komplexierungsmitteln in der Mercerisierflotte verzichtet werden kann.

Als cellulosehaltige Fasermaterialien kommen insbesondere Baumwolle und Mischgewebe mit Regeneratcellulosen wie z.B. Zellwollen und Kunstseiden (Reyon) in Frage. Die Mercerisierung von Mischgeweben aus nativen (z.B. Baumwolle, sowie Hanf und Flachs) und regenerierten Cellulosen stellt aber auf Grund der auseinanderstrebenden Eigenschaften dieser Komponenten hohe Anforderungen an die Konzentration und Zusammensetzung der Mercerisierflotten. Deshalb wird Mischgewebe fast ausschliesslich trocken mercerisiert, wodurch ein zusätzlicher (kritischer) Kontakt des Mischgewebes mit Koch-bzw. Netzbädern vermieden wird.

Technisch wird die Mercerisation als Garn- oder Stückmercerisation durchgeführt. Eine detaillierte Beschreibung dieser Verfahrensvarianten sowie auch der Mercerisation im allgemeinen ist z.B. in Lindner, Textilhilfsmittel und Waschrohstoffe, Wissenschaftliche Verlagsgesellschaft, Stuttgart, 1964, Band 2, Seite 1474ff angegeben.

Erfindungsgemässe Mercerisierbäder ermöglichen aber auch eine schnelle und störungsfreie Rückgewinnung des Alkalihydroxids aus den auf das Mercerisierbad folgenden (Mercerisier-) Waschbädern. Beim Abdestillieren des Wassers aus diesen Bädern, wodurch eine Aufkonzentrierung des Alkalihydroxids auf den Alkalihydroxidgehalt des Mercerisierbades erreicht wird, zeigen diese Mercerisiernetzmittel eine nur sehr geringe Tendenz zur Schaumbildung. Die erhaltene konzentrierte Alkalihydroxid-Lösung kann dann im Mercerisierbad wieder verwendet werden.

Die folgenden Beispiele erläutern die Erfindung, ohne sie darauf zu beschränken. Teile und Prozente beziehen sich auf das Gewicht, sofern nicht anders angegeben.

# EP 0 638 685 B1

Beispiele 1 bis 4: In diesen Beispielen wird das Schrumpfvermögen von Baumwolle in Mercerisierbädern gemäss DIN 53987 bestimmt. Das Schrumpfvermögen ist definitionsgemäss diejenige Zeit, die benötigt wird, um das in der Mercerisierlauge eingetauchte Baumwollgarn um einen gewissen Betrag seiner ursprünglichen Länge zu schrumpfen. Dazu wird ein Garnstrang aus abgekochter Rohbaumwolle (Gewicht: 1 g; Länge: 24 cm), der mit einem Gewicht von 33 g beschwert ist, in einen mit der alkalischen Mercerisierlösung gefüllten Glaszylinder getaucht. Dabei wird die Zeit gemessen, die der Garnstrang benötigt, um in der Alkalihydroxid-Lösung von 30°Bé (30°Bé entspricht einer Lauge, die 23,5 g 100%ige NaOH in 100 g Lauge enthält) eine Schrumpfung von 20% zu erreichen. Die Ergebnisse sind in der Tabelle 1 angegeben.

Tabelle 1:

| Bei-spiel | Verbin-dung Nr. | | Konzen-tration [g/l] | Schrumpf-vermögen [s] |
|---|---|---|---|---|
| 1 | (101) | | 6 | **13** |
| 2 | (101) + (102) | Lösung von 32,4% Butylglycosid in Butanol | 3,6 2,4 | **5** |
| 3 | (103) | | 6 | **15** |
| 4 | (103) + (102) | | 4,8 1,2 | **9** |

Neben den Verbindungen der Formeln (101) bis (103) sind auch die folgenden Verbindungen verwendbar:

5

| $R_1$-$CH_2(CHOH)_{\overline{m}}$—$A$-$NH$-$R_2$ | | | | |
|---|---|---|---|---|
| Verbindung der Formel | $R_1$ | $R_2$ | A | m |
| (104) | $NaSO_3$ | $(CH_2)_5CH_3$ | -(CO)NH- | 4 |
| (105) | $NaSO_3$ | $(CH_2)_7CH_3$ | -(CONH)- | 4 |
| (106) | $NaSO_3$ | -$(CH_2)_9CH_3$ | -(CONH)- | 4 |
| (107) | $NaSO_3$ | -$(CH_2)_5CH_3$ | -O- | 3 |
| (108) | $NaSO_3$ | -$(CH_2)_3CH_3$ | -O- | 3 |
| (109) | $NaSO_3$ | -$(CH_2)_5CH_3$ | -O- | 3 |
| (110) | $NaSO_3$ | -$(CH_2)_7CH_3$ | -O- | 3 |
| (111) | $NaSO_3$ | -$(CH_2)_9CH_3$ | -O- | 3 |
| (112) | OH | -$CH_2CH$-$(CH_2)_3CH_3$ $\vert$ $CH_2CH_3$ | -(CO)NH- | 4 |
| (113) | $NaSO_3$ | -$CH_2CH$-$(CH_2)_3CH_3$ $\vert$ $CH_2CH_3$ | -(CO)-NH- | 3 |
| (114) | OH | -$CH_2CH$-$(CH_2)_3CH_3$ $\vert$ $CH_2CH_3$ | -(CO)NH- | 3 |

Beispiel 5: Bestimmung des Eisenbindevermögens [mg Fe/g]

0,1 g der Verbindung der Formel (101) werden in ca. 19 g Wasser gelöst und in einer Versuchsreihe mit steigender Menge einer 1 molaren $FeCl_3$-Lösung in Schritten von jeweils 0,1 ml versetzt. Die Bäder werden dann mit 80 g 29,375%iger NaOH-Lösung auf 100 g ergänzt. Das Eisenbindevermögen der Verbindung der Formel (101) beträgt 110 mg Eisen/g. Wird anstelle der Verbindung der Formel (101) 0,1 g der Verbindung der Formel (103) eingesetzt, wird ein Eisenbindevermögen von 170 mg Eisen/g erreicht.

Beispiel 6: Abbaubarkeit gemäss der OECD-Methode 302 B:

Für diesen Test wird eine Mischung, enthaltend die Testsubstanz, mineralische Nährstoffe und einen relativ hohen Anteil an aktiviertem Bodensatz, in wässrigem Medium gerührt und bei 20 bis 25°C im Dunkeln oder in diffusem Licht 28 Tage belüftet. Parallel dazu laufen Blindproben, die den aktivierten Bodensatz sowie die Mineralien, jedoch nicht die Testsubstanz enthalten. Der biologische Abbauprozess wird gewöhnlich täglich oder in bestimmten Zeitintervallen durch die Bestimmung von DOC (= "dissolved organic carbon") oder COD (= "chemical oxygen demand") in gefilterten Proben gemessen. Der OECD-Wert, ausgedrückt in Prozent, ist das Verhältnis von eliminiertem DOC (oder COD) zum anfänglichen DOC-Wert, korrigiert für die Blindprobe nach jedem gemessenen Zeitintervall.

Für die erfindungsgemässen Verbindungen wurden die folgenden OECD-Werte ermittelt:

| Verbindung der Formel (101) | 56 % nach 13 Tagen |
| Verbindung der Formel (103) | 98 % nach 15 Tagen. |

**Patentansprüche**

1.  Mercerisierbad, enthaltend

    (a) mindestens eine Verbindung der Formel

    $$(2) \qquad R_1\text{-}CH_2(CHOH)_m CO\text{-}NH\text{-}R_3$$

    oder mindestens eine Verbindung der Formel

    $$(3) \qquad R_1\text{-}CH_2(CHOH)_m O\text{-}R_4,$$

    worin

    $R_1$ Hydroxy oder $-SO_3M$,
    $R_3$ $C_4$-$C_{10}$-Alkyl,
    $R_4$ $C_6$-$C_{10}$-Alkyl,
    M Alkalimetall und
    m 2 bis 6 bedeuten,

    (b) eine Alkylimetallhydroxid-Lösung und
    (c) Wasser ad 100 Gew.%,

    wobei die Komponente (a) in einer Konzentration von 1 bis 20 g/l, und die Komponente (b) in einer Konzentration von 22 bis 28 Gew.% anwesend sind.

2.  Mercerisierbad gemäss Anspruch 1, dadurch gekennzeichnet, dass in den Formeln (2) und (3)
    m      2 bis 4
    bedeutet.

3.  Verfahren zum Mercerisieren cellulosehaltiger Fasermaterialien, dadurch gekennzeichnet, dass man ein Mercerisierbad nach Anspruch 1 verwendet.

4.  Verfahren zur Reduzierung der Schaumbildung bei der Rückgewinnung von Alkalihydroxid aus Mercerisierwaschbädern, dadurch gekennzeichnet, dass man ein Mercerisierbad nach einem der Ansprüche 1 oder 2 zusetzt.

**Claims**

1.  A mercerizing bath comprising

    (a) at least one compound of the formula

    $$(2) \qquad R_1\text{-}CH_2(CHOH)_m CO\text{-}NH\text{-}R_3$$

    or at least one compound of the formula

    $$(3) \qquad R_1\text{-}CH_2(CHOH)_m O\text{-}R_4$$

where

$R_1$ is hydroxyl or -$SO_3M$,
$R_3$ is $C_4$-$C_{10}$alkyl,
$R_4$ is $C_6$-$C_{10}$alkyl,
M is an alkali metal, and
m is from 2 to 6,

(b) an alkali metal hydroxide solution and
(c) water to 100% by weight,

wherein component (a) is present in a concentration of 1 to 20 g/l, and component (b) is present in a concentration of 22 to 28% by weight.

2. A mercerizing bath according to claim 1, characterized in that

m   is from 2 to 4

in the formulae (2) and (3).

3. A process for mercerizing cellulosic fibre materials, characterized in that a mercerizing bath according to claim 1 is used.

4. A process for reducing foaming in the recovery of alkali metal hydroxide from mercerizing wash baths, characterized in that a mercerizing bath according to either of claims 1 and 2 is used.


**Revendications**

1. Bain de mercerisage contenant

(a) au moins un composé de formule

$$(2) \qquad R_1\text{-}CH_2(CHOH)_m CO\text{-}NH\text{-}R_3$$

ou au moins un composé de formule

$$(3) \qquad R_1\text{-}CH_2(CHOH)_m O\text{-}R_4,$$

où

$R_1$ représente un groupe hydroxyle ou -$SO_3M$,
$R_3$ représente un groupe alkyle en $C_{4\text{-}10}$,
$R_4$ représente un groupe alkyle en $C_{6\text{-}10}$,
M représente un métal alcalin et
m a une valeur comprise entre 2 et 6,

(b) une solution d'hydroxyde de métal alcalin et
(c) de l'eau en une quantité suffisante pour compléter à 100 %,

le composant (a) étant présent à raison de 1 à 20 g/l et le composant (b) étant présent à raison de 22 à 28 % en poids.

2. Composition de mercerisage selon la revendication 1, caractérisée en ce que, dans les formules (2) et (3), m vaut de 2 à 4.

3. Procédé de mercerisage de matériaux fibreux contenant de la cellulose, caractérisé en ce que l'on utilise une composition de mercerisage selon la revendication 1.

4. Procédé de réduction de la formation de mousse lors de la récupération d'hydroxyde alcalin à partir de bains de mercerisage. caractérisé en ce que l'on ajoute une composition de mercerisage selon une des revendications 1 et 2.